# EUROPEAN PATENT APPLICATION

(11) **EP 4 810 877 A1**
(43) Date of publication of application: **23.09.2026**
(21) Application number: 25761667.2
(22) Date of filing: 17.01.2025
(51) Int. Cl.: F25B 49/02, B60K 6/42, B60W 10/30, H02M 3/00

(54) **VOLTAGE CONVERSION DEVICE, REFRIGERATION CYCLE SYSTEM, AND VEHICLE**

(30) Priority: 29.02.2024 JP 2024029340
(71) Applicant: Mitsubishi Heavy Industries Thermal Systems, Ltd., Tokyo 100-8332 (JP)
(72) Inventor: KOMORIYA, Taiki, Tokyo 100-8332 (JP); OHATA, Yohei, Tokyo 100-8332 (JP); JINNO, Hiroki, Tokyo 100-8332 (JP)
(74) Representative: Cabinet Beau de Loménie
(86) International application number: PCT/JP2025/001429
(87) International publication number: WO 2025/182342

(57) **Abstract**

A voltage conversion device that converts voltages input from a low-voltage power supply and a high-voltage power supply into voltages corresponding to an electric compressor of a refrigeration cycle and outputs the voltages, the voltage conversion device including: a low-voltage-side converter that converts a direct-current low voltage input from the low-voltage power supply into a direct-current set voltage set in advance to drive the electric compressor; a high-voltage-side converter that converts a direct-current high voltage input from the high-voltage power supply into the direct-current set voltage; and a switching circuit unit that switches, according to a voltage input state from the low-voltage power supply and the high-voltage power supply, a voltage output state from the low-voltage-side converter and the high-voltage-side converter to the electric compressor.

## Description

### Technical Field

The present disclosure relates to a voltage conversion device, a refrigeration cycle system, and a vehicle. Priority is claimed on Japanese Patent Application No. 2024-029340, filed February 29, 2024, the content of which is incorporated herein by reference.

### Background Art

A refrigeration cycle (refrigerator) may be installed in a so-called hybrid vehicle in which an engine and a motor are used in combination as a driving source for traveling, in order to cool a refrigerated storage compartment. In this case, since a compressor of the refrigeration cycle is driven by an inverter, a direct-current power supply is required.

For example, PTL 1 discloses a configuration including an electric compressor that compresses a refrigerant, a high-voltage electrical equipment that drives the electric compressor, and a low-voltage equipment that controls driving of the electric compressor. In this configuration, the electric compressor is driven by high-voltage power from the high-voltage electrical equipment.

In addition, PTL 2 discloses a configuration including a step-up converter that steps up a direct-current low voltage supplied from a low-voltage power supply to a direct-current high voltage, an inverter that converts the direct-current high voltage into an AC high voltage, and an electric compressor that is driven by the inverter and compresses a refrigerant. In this configuration, the electric compressor is driven by low-voltage power supplied from a low-voltage power supply, which is a battery.

### Citation List

### Patent Literature

[PTL 1] Japanese Unexamined Patent Application Publication No. 2016-211788
[PTL 2] Japanese Patent No. 7137334

### Summary of Invention

### Technical Problem

However, in a case where the electric compressor is driven by high-voltage power as in the configuration described in PTL 1, power for driving the electric compressor is obtained from a high-voltage battery. Therefore, the amount of stored electricity in the battery may decrease, and necessary power may not be obtained from the battery for vehicle travel.

In addition, in a case where the electric compressor is driven by low-voltage power as in the configuration described in PTL 2, the low-voltage power is obtained from a generator (alternator) driven by an engine for vehicle travel as a low-voltage power supply. Therefore, in order to operate a refrigeration cycle with the electric compressor, the generator and the engine that drives the generator may not be stopped.

Further, in a hybrid vehicle that uses an engine and a motor in combination, an output of the engine and an output of the motor may vary depending on a traveling state of the vehicle or the like. Even in such a hybrid vehicle, it is desired to efficiently and stably supply a voltage to a refrigeration cycle.

The present disclosure has been made to solve the above-described problems, and an object of the present disclosure is to provide a voltage conversion device, a refrigeration cycle system, and a vehicle capable of efficiently and stably supplying a voltage to a refrigeration cycle.

### Solution to Problem

In order to solve the above-described problems, a voltage conversion device according to the present disclosure is a voltage conversion device that converts voltages input from a low-voltage power supply and a high-voltage power supply into voltages corresponding to an electric compressor of a refrigeration cycle and outputs the converted voltages, the voltage conversion device including: a low-voltage-side converter that converts a direct-current low voltage input from the low-voltage power supply into a direct-current set voltage set in advance to drive the electric compressor; a high-voltage-side converter that converts a direct-current high voltage input from the high-voltage power supply into the direct-current set voltage; and a switching circuit unit that switches, according to a voltage input state from the low-voltage power supply and the high-voltage power supply, a voltage output state from the low-voltage-side converter and the high-voltage-side converter to the electric compressor.

A refrigeration cycle system according to the present disclosure includes: the voltage conversion device as described above; and a refrigeration cycle including an electric compressor driven by the direct-current set voltage output from the voltage conversion device.

A vehicle according to the present disclosure includes: a vehicle body; and the refrigeration cycle system as described above installed in the vehicle body. Advantageous Effects of Invention

According to the voltage conversion device, the refrigeration cycle system, and the vehicle of the present disclosure, it is possible to efficiently and stably supply a voltage to a refrigeration cycle.

### Brief Description of Drawings

FIG. 1 is a diagram showing a schematic configuration of a vehicle including a voltage conversion device and a refrigeration cycle system according to an embodiment of the present disclosure.
FIG. 2 is a diagram showing a circuit configuration of the voltage conversion device.
FIG. 3 is a diagram showing a state in which a direct-current high voltage is input from a high-voltage power supply to a high-voltage-side drive circuit in the voltage conversion device according to the embodiment of the present disclosure.
FIG. 4 is a diagram showing a state following FIG. 3.
FIG. 5 is a diagram showing a state following FIG. 4.
FIG. 6 is a diagram showing a state in which the input of the direct-current high voltage from the high-voltage power supply is ended from the state shown in FIG. 5 in the voltage conversion device according to the embodiment of the present disclosure.
FIG. 7 is a diagram showing a state in which a direct-current low voltage is input from a low-voltage power supply to a low-voltage-side drive circuit in the voltage conversion device according to the embodiment of the present disclosure.
FIG. 8 is a diagram showing a state following FIG. 7.
FIG. 9 is a diagram showing a state following FIG. 8.
FIG. 10 is a diagram showing a state in which the input of the direct-current low voltage from the low-voltage power supply is ended from the state shown in FIG. 9 in the voltage conversion device according to the embodiment of the present disclosure.
FIG. 11 is a diagram showing a state in which the direct-current low voltage is input from the low-voltage power supply to the low-voltage-side drive circuit from the state shown in FIG. 5 in the voltage conversion device according to the embodiment of the present disclosure.
FIG. 12 is a diagram showing a state following FIG. 11.
FIG. 13 is a diagram showing a state following FIG. 12.
FIG. 14 is a diagram showing a state following FIG. 13.
FIG. 15 is a diagram showing a state in which the input of the direct-current low voltage from the low-voltage power supply is ended from the state shown in FIG. 14 in the voltage conversion device according to the embodiment of the present disclosure.
FIG. 16 is a diagram showing a state following FIG. 15.
FIG. 17 is a diagram showing a state following FIG. 16.
FIG. 18 is a diagram showing a state following FIG. 17.
FIG. 19 is a diagram showing a state in which the direct-current high voltage is to be input from the high-voltage power supply to the high-voltage-side drive circuit from the state shown in FIG. 9 in the voltage conversion device according to the embodiment of the present disclosure.

### Description of Embodiments

Hereinafter, embodiments of a voltage conversion device, a refrigeration cycle system, and a vehicle according to the present disclosure will be described with reference to the accompanying drawings. However, the present disclosure is not limited only to the embodiment.

### (Configuration of Vehicle)

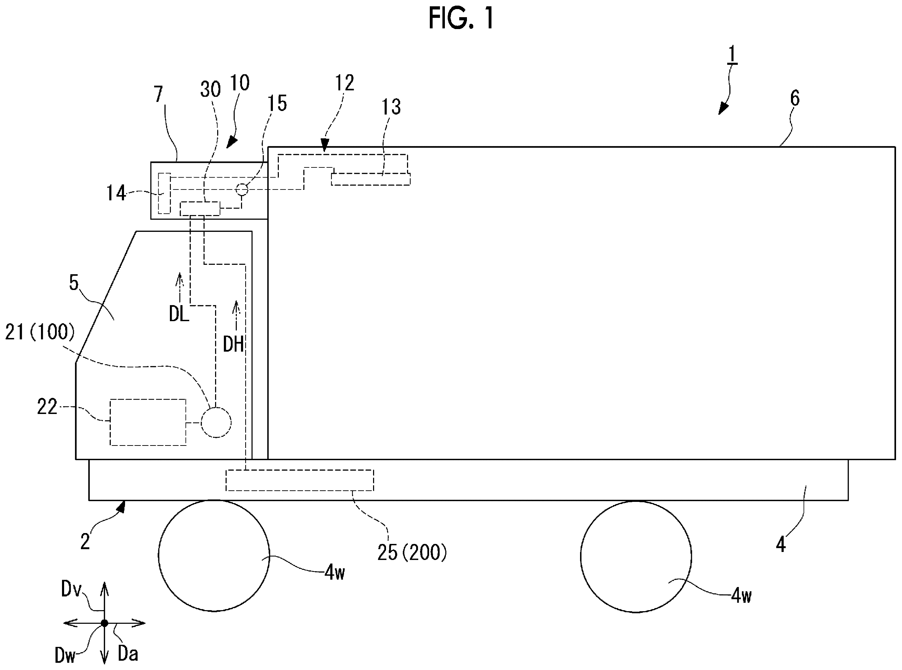

As shown in FIG. 1, a vehicle 1 includes a vehicle body 2 and a refrigeration cycle system 10.

The vehicle body 2 in the present embodiment is, for example, a truck. In this case, the vehicle body 2 includes a chassis 4, a cabin 5, and a container 6. The chassis 4 includes a plurality of wheels 4w. The cabin 5 is mounted on a front portion of the chassis 4. The cabin 5 can be boarded by an occupant. The container 6 is mounted on a rear portion of the chassis 4. The container 6 is disposed rearward of the cabin 5. The container 6 is formed in a hollow rectangular parallelepiped shape. Cargo that requires refrigeration or freezing can be accommodated inside the container 6.

The vehicle body 2 may be, for example, a trailer. In this case, the vehicle body 2 includes a tractor on which the container 6 can be mounted, and the cabin 5 that can be boarded by the occupant and that pulls the tractor.

The vehicle body 2 is a so-called hybrid vehicle including an engine 22 for traveling and a traveling motor (not shown) driven by a battery 25 in order to rotationally drive the wheels 4w to cause the vehicle body 2 to travel. The engine 22, the battery 25, and the traveling motor are provided at appropriate positions of the chassis 4 or the cabin 5.

The vehicle body 2 controls an output from the engine 22 and an output from the motor in accordance with a traveling state of the vehicle body 2, an operation performed by the occupant, such as an accelerator or a brake, a charge amount (remaining amount) of the battery 25, and the like under the control of a vehicle controller (not shown). Here, the specific output control of the engine 22 and the motor in the vehicle body 2 as the hybrid vehicle is not limited in the present embodiment.

The vehicle body 2 has a mode in which the vehicle body 2 travels only by the output from the engine 22, a mode in which the vehicle body 2 travels only by the output from the motor driven by the electric power supplied from the battery 25, and a mode in which the vehicle body 2 travels by the output from the engine 22 and the output from the motor.

The vehicle body 2 includes a generator (alternator) 21 driven by the engine 22. The generator 21 is connected to an output shaft of the engine 22. The generator 21 generates power by being rotated by the engine 22. The generator 21 is a low-voltage power supply 100 and generates a direct-current low voltage DL having a voltage lower than a high-voltage power supply 200 to be described later, for example, 12 V or 24 V. In the present disclosure, the direct-current low voltage DL output from the low-voltage power supply 100 is, for example, 24 V.

The battery 25 is a high-voltage power supply 200 and outputs a direct-current high voltage DH having a voltage higher than the low-voltage power supply 100. In the present disclosure, the direct-current high voltage DH output from the high-voltage power supply 200 is, for example, 300 V. The direct-current high voltage DH output from the high-voltage power supply 200 is not limited to 300 V and may be another voltage set by a manufacturer of the vehicle body 2 or the like.

### (Configuration of Refrigeration Cycle System)

The refrigeration cycle system 10 mainly includes a refrigeration cycle 12 and a voltage conversion device 30.

The refrigeration cycle 12 includes an electric compressor 15, an indoor heat exchanger 13, an outdoor heat exchanger 14, an indoor heat exchange fan (not shown), an outdoor heat exchange fan (not shown), an expansion valve (not shown), an accumulator (not shown), and a receiver (not shown).

The electric compressor 15, the outdoor heat exchanger 14, and the outdoor heat exchange fan (not shown) are accommodated in a unit housing 7 provided in a front portion of the container 6 and above the cabin 5. The electric compressor 15 compresses a refrigerant. The outdoor heat exchanger 14 is disposed outside a container 11. The outdoor heat exchanger 14 cools the refrigerant supplied from the electric compressor 15 by exchanging heat with outside air. The outdoor heat exchange fan (not shown) is disposed in the vicinity of the outdoor heat exchanger 14. The outdoor heat exchange fan (not shown) sends the outside air to the outdoor heat exchanger 14. The refrigerant cooled by the outdoor heat exchanger 14 is supplied to the expansion valve (not shown) via the receiver (not shown). The expansion valve expands (depressurizes) the refrigerant supplied from the receiver.

The indoor heat exchanger 13 is provided inside the container 11. The indoor heat exchanger 13 cools the atmosphere in the container 11 by exchanging heat between the refrigerant expanded by the expansion valve and the atmosphere in the container 11. The indoor heat exchange fan (not shown) is disposed in the vicinity of the indoor heat exchanger 13. The indoor heat exchange fan (not shown) sends the air cooled by the indoor heat exchanger 13 in the container 11 to cool the inside of the container 11.

The accumulator (not shown) receives the refrigerant that has passed through the indoor heat exchanger 13. The accumulator supplies the received refrigerant to the electric compressor 15.

### (Configuration of Voltage Conversion Device)

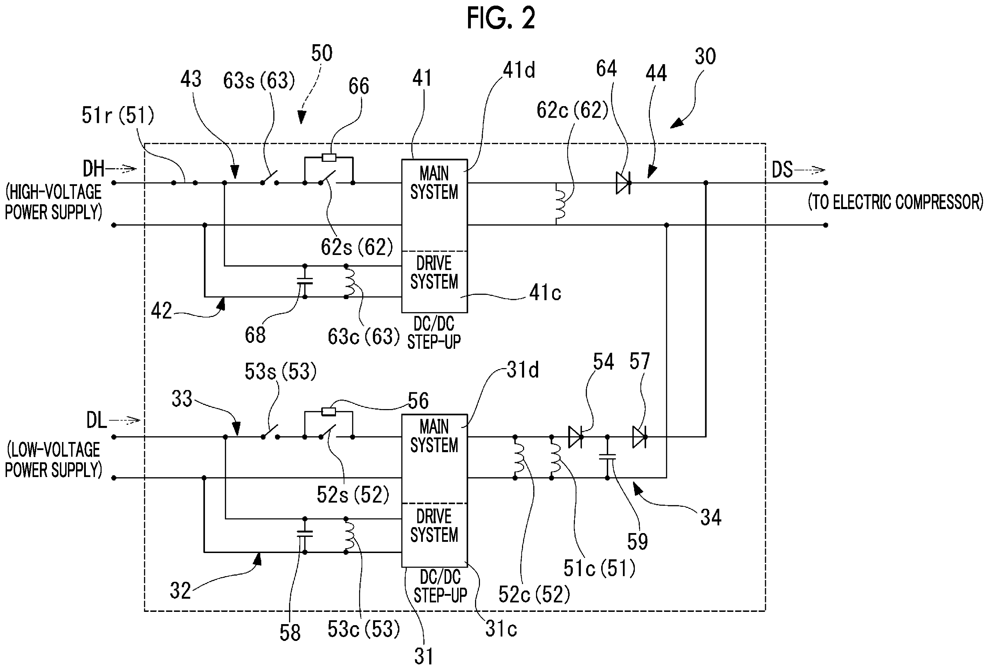

As shown in FIG. 2, the voltage conversion device 30 converts the voltages input from the low-voltage power supply 100 and the high-voltage power supply 200 into a voltage corresponding to the electric compressor 15 of the refrigeration cycle 12, and outputs the converted voltage. The voltage conversion device 30 converts the voltages input from the low-voltage power supply 100 and the high-voltage power supply 200 into a direct-current set voltage DS set in advance in order to drive the electric compressor 15. The direct-current set voltage DS is higher than the direct-current low voltage DL and lower than the direct-current high voltage DH. In the present disclosure, the direct-current set voltage DS for driving the electric compressor 15 is set to, for example, 270 V. The direct-current set voltage DS may be lower than the direct-current low voltage DL or may be higher than the direct-current high voltage DH.

The voltage conversion device 30 includes a low-voltage-side converter 31, a high-voltage-side converter 41, and a switching circuit unit 50.

The low-voltage-side converter 31 is a DC/DC step-up converter, and converts (steps up) the direct-current low voltage DL (24 V) input from the low-voltage power supply 100 into the direct-current set voltage DS (270 V) set in advance to drive the electric compressor 15. The high-voltage-side converter 41 is a DC/DC step-down converter, and converts (steps down) the direct-current high voltage DH (300 V) input from the high-voltage power supply 200 into the direct-current set voltage DS (270 V).

The switching circuit unit 50 switches a voltage output state from the low-voltage-side converter 31 and the high-voltage-side converter 41 to the electric compressor 15 according to a voltage input state from the low-voltage power supply 100 and the high-voltage power supply 200.

The switching circuit unit 50 includes a low-voltage-side drive circuit 32, a low-voltage-side main circuit 33, a low-voltage-side output circuit 34, a high-voltage-side drive circuit 42, a high-voltage-side main circuit 43, and a high-voltage-side output circuit 44.

The low-voltage-side drive circuit 32 inputs (applies) the direct-current low voltage DL from the low-voltage power supply 100 to a drive system 31c of the low-voltage-side converter 31. The low-voltage-side main circuit 33 inputs the direct-current low voltage DL from the low-voltage power supply 100 to a main system 31d of the low-voltage-side converter 31. The low-voltage-side drive circuit 32 and the low-voltage-side main circuit 33 are provided to be branched from each other at an input unit of the direct-current low voltage DL from the low-voltage power supply 100.

The low-voltage-side converter 31 steps up the direct-current low voltage DL input to the main system 31d to the direct-current set voltage DS based on the direct-current low voltage DL input (applied) to the drive system 31c. The low-voltage-side output circuit 34 outputs the direct-current set voltage DS output from the main system 31d of the low-voltage-side converter 31 to the electric compressor 15.

The high-voltage-side drive circuit 42 inputs (applies) the direct-current high voltage DH from the high-voltage power supply 200 to a drive system 41c of the high-voltage-side converter 41. The high-voltage-side main circuit 43 inputs the direct-current high voltage DH from the high-voltage power supply 200 to a main system 41d of the high-voltage-side converter 41. The high-voltage-side drive circuit 42 and the high-voltage-side main circuit 43 are provided to be branched from each other at an input unit of the direct-current high voltage DH from the high-voltage power supply 200.

The high-voltage-side converter 41 steps down the direct-current high voltage DH input to the main system 41d to the direct-current set voltage DS based on the direct-current high voltage DH input (applied) to the drive system 41c. The high-voltage-side output circuit 44 outputs the direct-current set voltage DS output from the main system 41d of the high-voltage-side converter 41 to the electric compressor 15. The low-voltage-side output circuit 34 and the high-voltage-side output circuit 44 are merged with each other at an output unit to the electric compressor 15.

The switching circuit unit 50 includes a high-voltage cutoff relay 51, a low-voltage-side first relay 52, a low-voltage-side second relay 53, a low-voltage-side diode 54, a low-voltage-side inrush resistor 56, a low-voltage-side first capacitor 58, a low-voltage-side second capacitor 59, a high-voltage-side first relay 62, a high-voltage-side second relay 63, a high-voltage-side first relay 62, a high-voltage-side second relay 63, a high-voltage-side diode 64, a high-voltage-side inrush resistor 66, and a high-voltage-side capacitor 68.

The high-voltage cutoff relay 51 includes a coil 51c and a switch 51r. The coil 51c is connected to the low-voltage-side output circuit 34. The switch 51r is connected to an upstream side of the high-voltage-side drive circuit 42 and the high-voltage-side main circuit 43. Here, the high-voltage cutoff relay 51 including the coil 51c and the switch 51r is essentially one component. In the high-voltage cutoff relay 51, the switch 51r is opened in a case where the direct-current set voltage DS output from the low-voltage-side converter 31 to the low-voltage-side output circuit 34 applies the coil 51c. That is, the high-voltage cutoff relay 51 cuts off, in a case where the direct-current set voltage DS is output to the low-voltage-side output circuit 34, the high-voltage-side drive circuit 42 and the high-voltage-side main circuit 43. As a result, the power supply from the high-voltage power supply 200 to the electric compressor 15 via the high-voltage-side converter 41 is cut off.

The low-voltage-side second relay 53 includes a coil 53c and a switch 53s. The coil 53c is connected to the low-voltage-side drive circuit 32. The switch 53s is connected to the low-voltage-side main circuit 33. Here, the low-voltage-side second relay 53 including the coil 53c and the switch 53s is essentially one component. In the low-voltage-side second relay 53, the switch 53s is closed in a case where the direct-current low voltage DL is input to the low-voltage-side drive circuit 32 and the coil 53c is applied. As a result, the low-voltage-side second relay 53 inputs the direct-current low voltage DL to the low-voltage-side main circuit 33 in a case where the direct-current low voltage DL is input to the low-voltage-side drive circuit 32.

The low-voltage-side first relay 52 includes a coil 52c and a switch 52s. The coil 52c is connected to the low-voltage-side output circuit 34. The switch 52s is connected to the low-voltage-side main circuit 33. The switch 52s is disposed on a downstream side of the switch 53s in the low-voltage-side main circuit 33. Here, the low-voltage-side first relay 52 including the coil 52c and the switch 52s is essentially one component. In the low-voltage-side first relay 52, the switch 52s is closed in a case where the direct-current set voltage DS output from the low-voltage-side converter 31 applies the coil 52c. As a result, the low-voltage-side first relay 52 inputs the direct-current low voltage DL to the low-voltage-side main circuit 33 in a case where the direct-current set voltage DS is output to the low-voltage-side output circuit 34.

The low-voltage-side inrush resistor 56 is disposed in parallel with the switch 52s of the low-voltage-side first relay 52 provided in the low-voltage-side main circuit 33. The low-voltage-side inrush resistor 56 is applied with the direct-current low voltage DL in a case where the switch 53s of the low-voltage-side second relay 53 is closed. The coil 52c of the low-voltage-side first relay 52 is applied with the direct-current set voltage DS output from the low-voltage-side converter 31, and the direct-current low voltage DL is applied to the low-voltage-side inrush resistor 56 until the switch 52s is closed. As a result, the low-voltage-side inrush resistor 56 suppresses the direct-current low voltage DL that enters the low-voltage-side converter 31 until the switch 52s is closed. After the switch 52s is closed, the application to the low-voltage-side inrush resistor 56 is cut off.

The low-voltage-side diode 54 is provided in the low-voltage-side output circuit 34. The low-voltage-side diode 54 outputs the direct-current set voltage DS only to the electric compressor 15 side from the low-voltage-side converter 31. The low-voltage-side diode 54 blocks the reverse flow of the direct-current set voltage DS from the high-voltage-side output circuit 44 side to the coils 51c and 52c.

The low-voltage-side first capacitor 58 is provided in the low-voltage-side drive circuit 32. The low-voltage-side first capacitor 58 is disposed on the upstream side of the coil 53c in the low-voltage-side drive circuit 32. The low-voltage-side first capacitor 58 stores electricity in a case where the direct-current low voltage DL is input to the low-voltage-side drive circuit 32. The low-voltage-side first capacitor 58 discharges in a case where the input of the direct-current low voltage DL to the low-voltage-side drive circuit 32 is cut off, and maintains the voltage supply to the coil 53c and the drive system 31c of the low-voltage-side converter 31 for a certain period of time.

The low-voltage-side second capacitor 59 is provided in the low-voltage-side output circuit 34. The low-voltage-side second capacitor 59 is disposed on the downstream side of the coils 51c and 52c and the low-voltage-side diode 54 in the low-voltage-side output circuit 34. The low-voltage-side second capacitor 59 stores electricity in a case where the direct-current set voltage DS is output to the low-voltage-side output circuit 34. The low-voltage-side second capacitor 59 discharges in a case where the output of the direct-current set voltage DS to the low-voltage-side output circuit 34 is cut off, and maintains the voltage supply to the electric compressor 15 for a certain period of time. In addition, a diode 57 is provided on the downstream side of the low-voltage-side second capacitor 59, and blocks the reverse flow of the direct-current set voltage DS from the high-voltage-side output circuit 44 side to the low-voltage-side second capacitor 59.

The high-voltage-side second relay 63 includes a coil 63c and a switch 63s. The coil 63c is connected to the high-voltage-side drive circuit 42. The switch 63s is connected to the high-voltage-side main circuit 43. Here, the high-voltage-side second relay 63 including the coil 63c and the switch 63s is essentially one component. In a case where the direct-current high voltage DH is input to the high-voltage-side drive circuit 42 and the coil 63c is applied, the switch 63s of the high-voltage-side second relay 63 is closed. As a result, in a case where the direct-current high voltage DH is input to the high-voltage-side drive circuit 42, the high-voltage-side second relay 63 inputs the direct-current high voltage DH to the high-voltage-side main circuit 43.

The high-voltage-side first relay 62 includes a coil 62c and a switch 62s. The coil 62c is connected to the high-voltage-side output circuit 44. The switch 62s is connected to the high-voltage-side main circuit 43. The switch 62s is disposed on the downstream side of the switch 63s in the high-voltage-side main circuit 43. Here, the high-voltage-side first relay 62 including the coil 62c and the switch 62s is essentially one component. In a case where the coil 62c is applied by the direct-current set voltage DS output from the high-voltage-side converter 41, the switch 62s of the high-voltage-side first relay 62 is closed. As a result, in a case where the direct-current set voltage DS is output to the high-voltage-side output circuit 44, the high-voltage-side first relay 62 inputs the direct-current high voltage DH to the high-voltage-side main circuit 43.

The high-voltage-side inrush resistor 66 is disposed in parallel with the switch 62s of the high-voltage-side first relay 62 provided in the high-voltage-side main circuit 43. In a case where the switch 63s of the high-voltage-side second relay 63 is closed, the direct-current high voltage DH is input to the high-voltage-side inrush resistor 66. The coil 62c of the high-voltage-side first relay 62 is applied by the direct-current set voltage DS output from the high-voltage-side converter 41, and the direct-current high voltage DH is applied to the high-voltage-side inrush resistor 66 until the switch 62s is closed. As a result, the high-voltage-side inrush resistor 66 suppresses the direct-current high voltage DH that enters the high-voltage-side converter 41 until the switch 62s is closed. After the switch 62s is closed, the application to the high-voltage-side inrush resistor 66 is cut off.

The high-voltage-side diode 64 is provided in the high-voltage-side output circuit 44. The high-voltage-side diode 64 outputs the direct-current set voltage DS only to the electric compressor 15 side from the high-voltage-side converter 41. The high-voltage-side diode 64 blocks the reverse flow of the direct-current set voltage DS to the coil 62c from the high-voltage-side output circuit 44 side.

The high-voltage-side capacitor 68 is provided in the high-voltage-side drive circuit 42. The high-voltage-side capacitor 68 is disposed on the upstream side of the coil 63c in the high-voltage-side drive circuit 42. The high-voltage-side capacitor 68 stores electricity in a case where the direct-current high voltage DH is input to the high-voltage-side drive circuit 42. The high-voltage-side capacitor 68 discharges in a case where the input of the direct-current high voltage DH to the high-voltage-side drive circuit 42 is cut off, and maintains the voltage supply to the coil 63c and the drive system 41c of the high-voltage-side converter 41 for a certain period of time.

In a case where the direct-current low voltage DL is input only from the low-voltage power supply 100, the switching circuit unit 50 of the voltage conversion device 30 as described above outputs the direct-current set voltage DS obtained by converting the direct-current low voltage DL in the low-voltage-side converter 31 to the electric compressor 15. In a case where the direct-current high voltage DH is input only from the high-voltage power supply 200, the switching circuit unit 50 outputs the direct-current set voltage DS obtained by converting the direct-current high voltage DH in the high-voltage-side converter 41 to the electric compressor 15. In addition, in a case where the direct-current low voltage DL from the low-voltage power supply 100 and the direct-current high voltage DH from the high-voltage power supply 200 are input, the switching circuit unit 50 outputs the direct-current set voltage DS obtained by converting the direct-current low voltage DL in the low-voltage-side converter 31 and the direct-current set voltage DS obtained by converting the direct-current high voltage DH in the high-voltage-side converter 41 to the electric compressor 15.

### (Operation of Voltage Conversion Device 30)

Next, the operation of the voltage conversion device 30 as described above will be described.

For example, as shown in FIG. 2, in a state where the voltage supply from the high-voltage power supply 200 and the low-voltage power supply 100 is not performed, only the switch 51r is in a closed state, and the other switches 53s, 52s, 63s, and 62s are in an open state.

### (Voltage Supply from High-Voltage Power Supply)

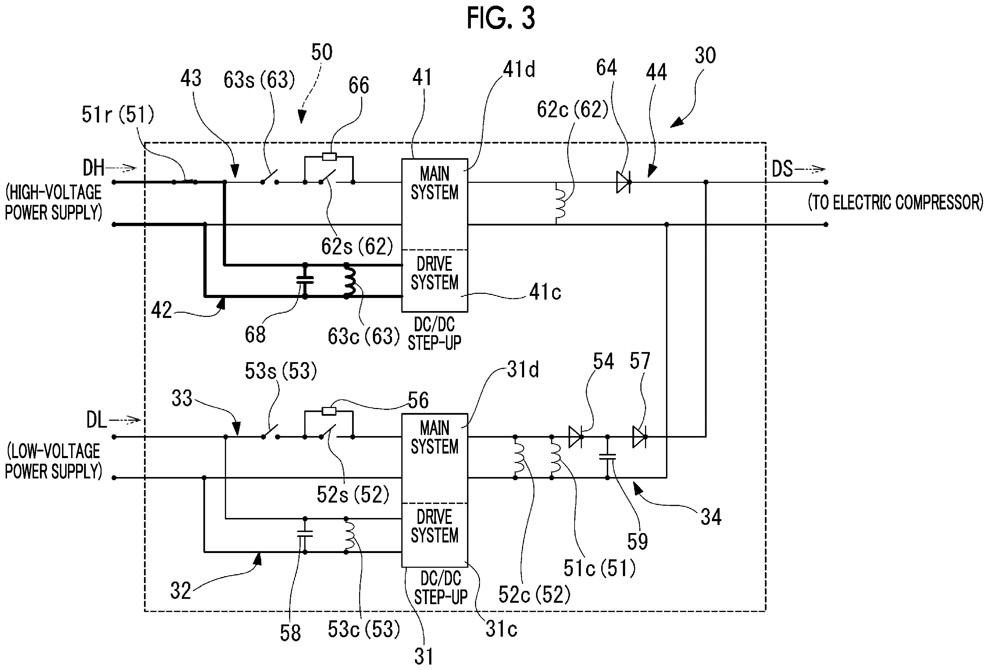

In a case where the direct-current high voltage DH is supplied from the high-voltage power supply 200 as shown in FIG. 3 from this state, the high-voltage-side drive circuit 42 is applied. Then, the drive system 41c of the high-voltage-side converter 41 is applied by the direct-current high voltage DH. In addition, the coil 63c of the high-voltage-side second relay 63 is applied and the high-voltage-side capacitor 68 stores electricity by the input of the direct-current high voltage DH to the high-voltage-side drive circuit 42.

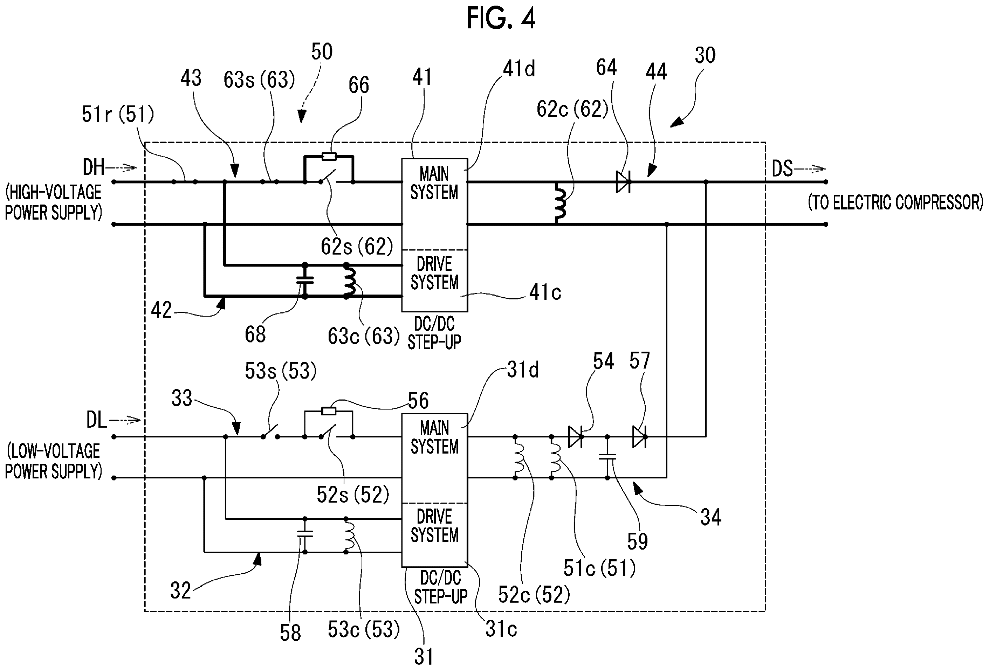

The coil 63c of the high-voltage-side second relay 63 is applied, so that the switch 63s provided in the high-voltage-side main circuit 43 is closed as shown in FIG. 4. Then, the direct-current high voltage DH from the high-voltage power supply 200 is input to the high-voltage-side main circuit 43. The direct-current high voltage DH input to the high-voltage-side main circuit 43 initially passes through the high-voltage-side inrush resistor 66 and is input to the main system 41d of the high-voltage-side converter 41. As a result, the direct-current high voltage DH that enters the high-voltage-side converter 41 is suppressed.

The direct-current high voltage DH input to the high-voltage-side converter 41 is stepped down to the direct-current set voltage DS and is supplied to the electric compressor 15 through the high-voltage-side output circuit 44. As a result, the refrigeration cycle system 10 starts to be driven by the voltage supply from the high-voltage power supply 200. In this case, the direct-current set voltage DS is output to the high-voltage-side output circuit 44, so that the coil 62c of the high-voltage-side first relay 62 is applied.

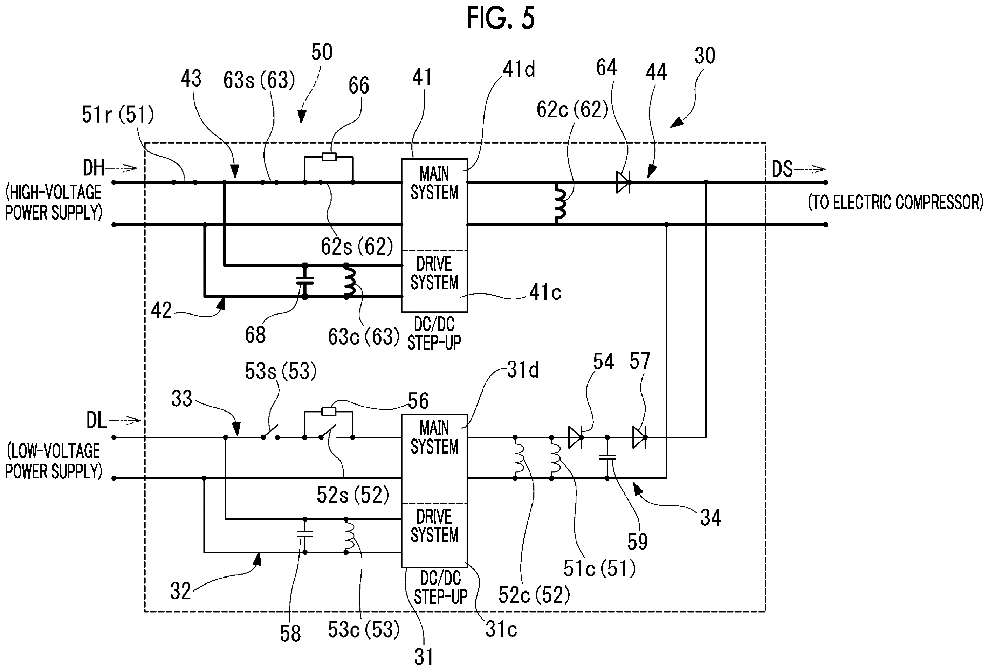

The coil 62c of the high-voltage-side first relay 62 is applied, so that the switch 62s provided in the high-voltage-side main circuit 43 is closed as shown in FIG. 5. Then, the direct-current high voltage DH from the high-voltage power supply 200 is directly input to the high-voltage-side converter 41 without passing through the high-voltage-side inrush resistor 66. As a result, the direct-current high voltage DH that has been suppressed by the high-voltage-side inrush resistor 66 returns to the original voltage.

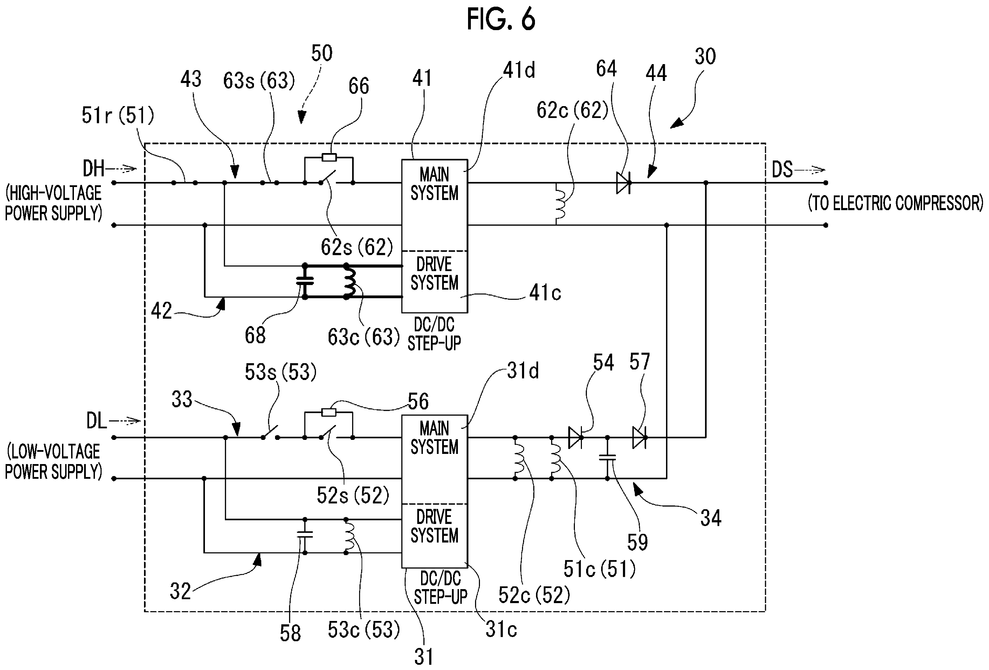

Thereafter, in a case where the supply of the direct-current high voltage DH from the high-voltage power supply 200 is stopped from the state shown in FIG. 5, the input of the direct-current high voltage DH to the high-voltage-side drive circuit 42 and the high-voltage-side main circuit 43 and the output of the direct-current set voltage DS from the high-voltage-side converter 41 are no longer present as shown in FIG. 6. Then, the coil 62c of the high-voltage-side first relay 62 is not applied, and the switch 62s is in an open state.

In this case, since the electric charge stored in the high-voltage-side capacitor 68 is released, the voltage supply to the coil 63c of the high-voltage-side second relay 63 and the drive system 41c of the high-voltage-side converter 41 is maintained for a certain period of time. As a result, the switch 63s maintains the closed state. In addition, the high-voltage-side converter 41 suppresses stopping the operation of the high-voltage-side converter 41 while the main system 41d is applied.

Thereafter, in a case where the discharge from the high-voltage-side capacitor 68 is completed, the coil 63c is not applied, the switch 63s is in an open state, and the state returns to the state shown in FIG. 2.

### (Voltage Supply from Low-Voltage Power Supply)

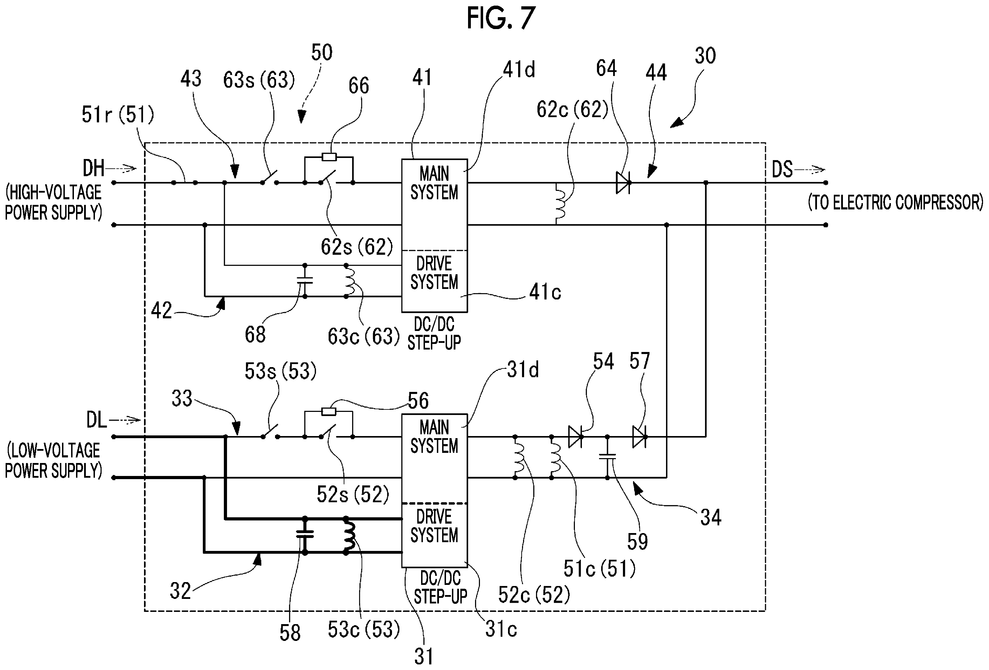

In a case where the direct-current low voltage DL is supplied from the low-voltage power supply 100 as shown in FIG. 7 from the state shown in FIG. 2, the direct-current low voltage DL is input to the low-voltage-side drive circuit 32. Then, the drive system 31c of the low-voltage-side converter 31 is applied by the direct-current low voltage DL. In addition, the coil 53c of the low-voltage-side second relay 53 is applied and the low-voltage-side first capacitor 58 stores electricity by the input of the direct-current low voltage DL to the low-voltage-side drive circuit 32.

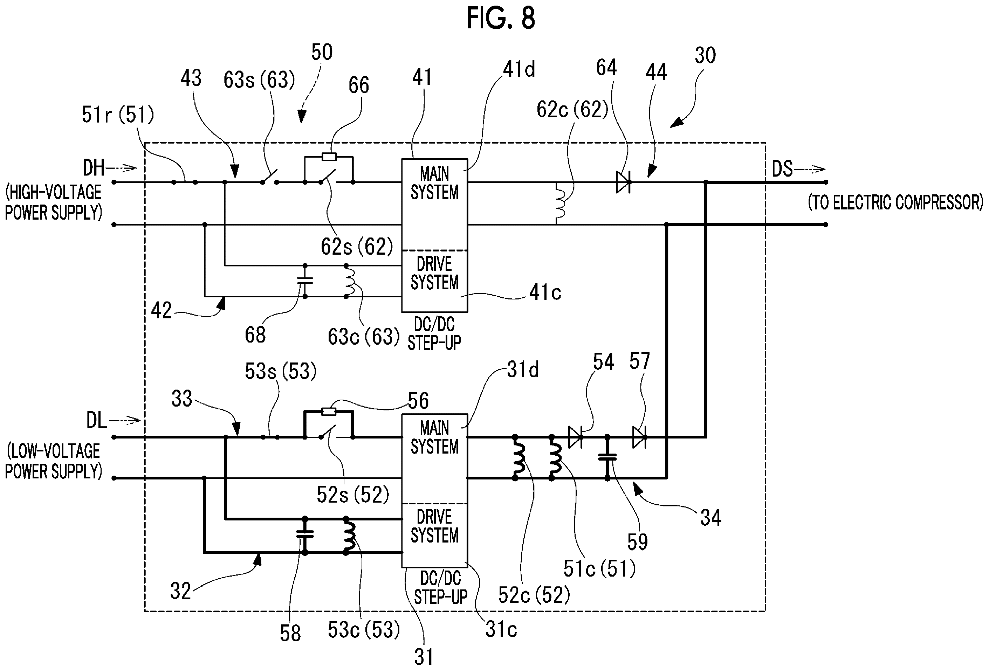

The coil 53c of the low-voltage-side second relay 53 is applied, so that the switch 53s provided in the low-voltage-side main circuit 33 is closed as shown in FIG. 8. Then, the direct-current low voltage DL from the low-voltage power supply 100 is input to the low-voltage-side main circuit 33. The direct-current low voltage DL input to the low-voltage-side main circuit 33 initially passes through the low-voltage-side inrush resistor 56 and is input to the main system 31d of the low-voltage-side converter 31. As a result, the direct-current low voltage DL entering the low-voltage-side converter 31 is suppressed.

The direct-current low voltage DL input to the low-voltage-side converter 31 is boosted to the direct-current set voltage DS and is supplied to the electric compressor 15 through the low-voltage-side output circuit 34. As a result, the refrigeration cycle system 10 starts to be driven by the voltage supply from the low-voltage power supply 100. In this case, in a case where the direct-current set voltage DS is output to the low-voltage-side output circuit 34, the coil 51c of the high-voltage cutoff relay 51 and the coil 52c of the low-voltage-side first relay 52 are applied.

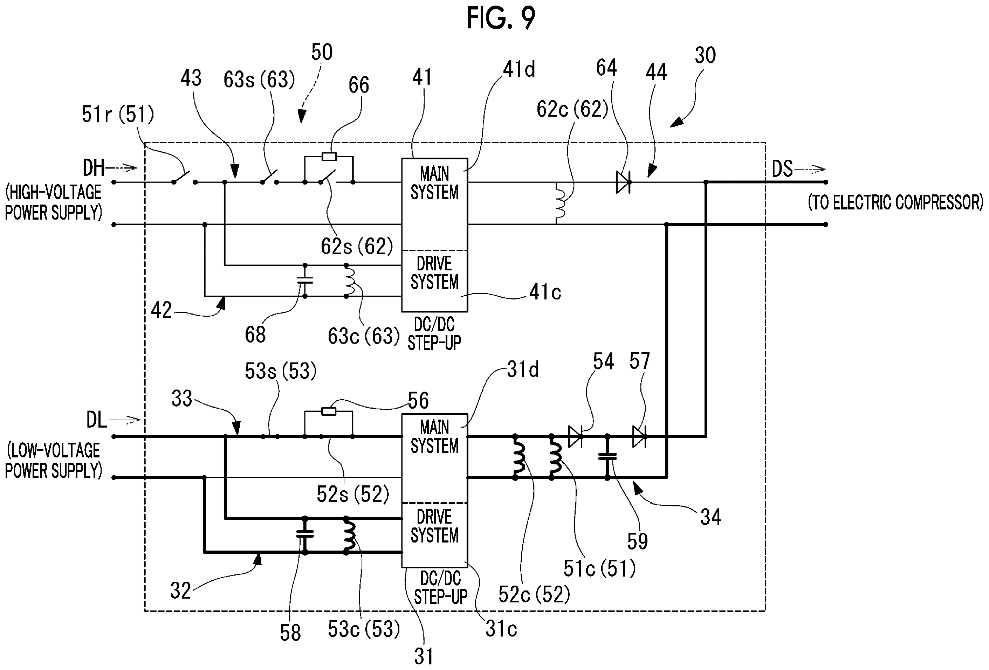

The coil 52c of the low-voltage-side first relay 52 is applied, so that the switch 52s provided in the low-voltage-side main circuit 33 is closed as shown in FIG. 9. Then, the direct-current low voltage DL from the low-voltage power supply 100 is directly input to the low-voltage-side converter 31 without passing through the low-voltage-side inrush resistor 56. As a result, the direct-current low voltage DL suppressed by the low-voltage-side inrush resistor 56 returns to the original voltage.

In addition, the coil 51c of the high-voltage cutoff relay 51 is applied, so that the switch 51r of the high-voltage cutoff relay 51 provided on the upstream side of the high-voltage-side drive circuit 42 and the high-voltage-side main circuit 43 is in an open state.

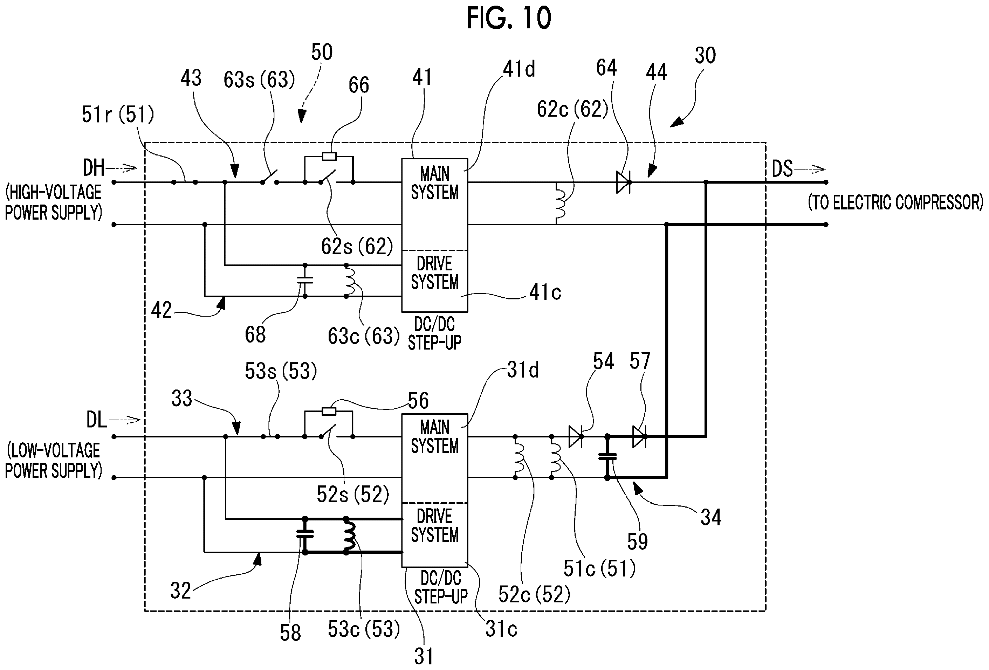

Thereafter, in a case where the supply of the direct-current low voltage DL from the low-voltage power supply 100 is stopped from the state shown in FIG. 9, the input of the direct-current low voltage DL to the low-voltage-side drive circuit 32 and the low-voltage-side main circuit 33 and the output of the direct-current set voltage DS from the low-voltage-side converter 31 are no longer present as shown in FIG. 10. Then, the coil 52c of the low-voltage-side first relay 52 is not applied, and the switch 52s is in an open state.

In this case, since the electric charges stored in the low-voltage-side first capacitor 58 and the low-voltage-side second capacitor 59 are released, the voltage supply to the coil 53c of the low-voltage-side second relay 53, the drive system 31c of the low-voltage-side converter 31, and the electric compressor 15 is maintained for a certain period of time. As a result, the switch 53s is maintained in a closed state. In addition, the low-voltage-side converter 31 suppresses the low-voltage-side converter 31 from stopping the operation while the main system 31d is applied.

In addition, the coil 51c of the high-voltage cutoff relay 51 is not applied, so that the switch 51r of the high-voltage cutoff relay 51 is in a closed state.

Thereafter, in a case where the discharge from the low-voltage-side first capacitor 58 is completed, the coil 53c is not applied, the switch 53s is in an open state, and the state returns to the state shown in FIG. 2.

### (Voltage Supply from Low-Voltage Power Supply in State of Voltage Supply from High-Voltage Power Supply)

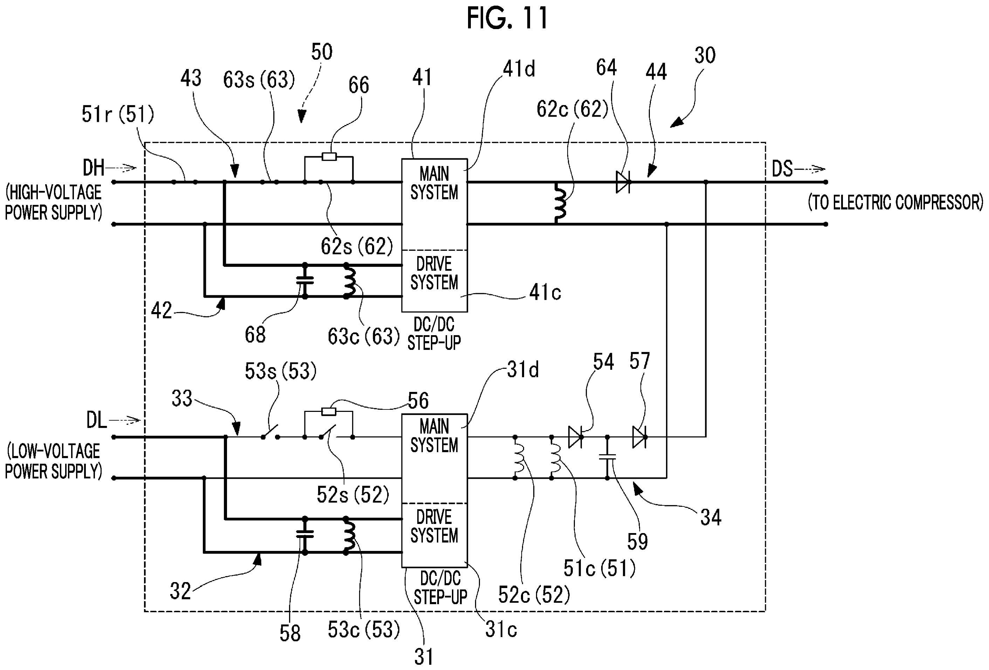

As shown in FIG. 5, in a state where the direct-current high voltage DH is input from the high-voltage power supply 200 and the direct-current set voltage DS converted by the high-voltage-side converter 41 is output to the electric compressor 15, for example, in order to perform the replenishment to the battery 25, which is the high-voltage power supply 200, in a case where the generator 21 is activated, the direct-current low voltage DL is input from the low-voltage power supply 100 to the voltage conversion device 30 as shown in FIG. 11. The direct-current low voltage DL from the low-voltage power supply 100 is input to the low-voltage-side drive circuit 32. Then, the drive system 31c of the low-voltage-side converter 31 is applied by the direct-current low voltage DL. In addition, the coil 53c of the low-voltage-side second relay 53 is applied and the low-voltage-side first capacitor 58 stores electricity by the input of the direct-current low voltage DL to the low-voltage-side drive circuit 32.

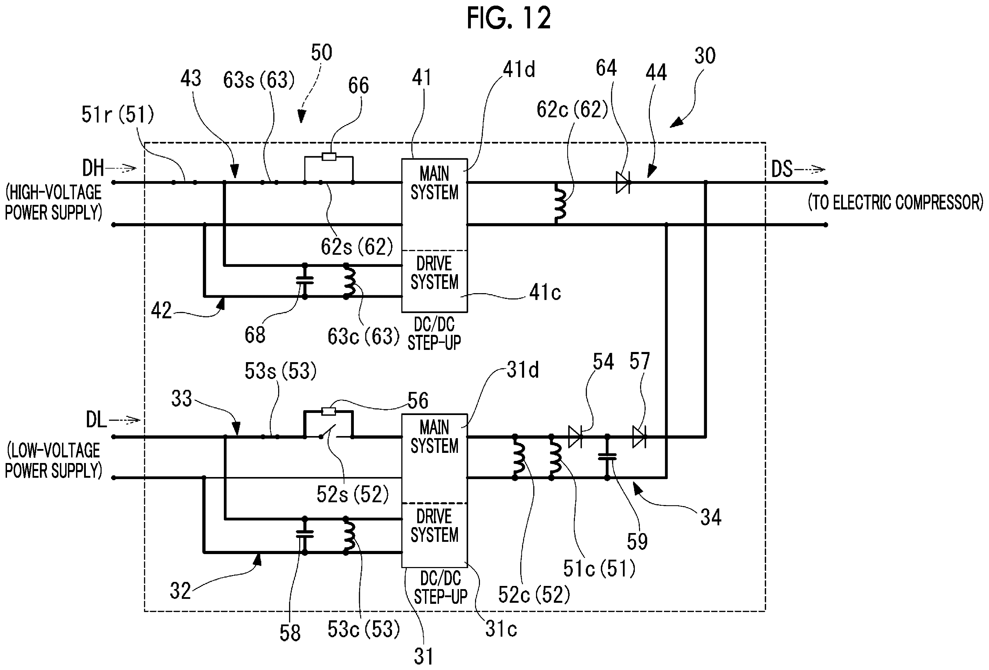

The coil 53c of the low-voltage-side second relay 53 is applied, so that the switch 53s provided in the low-voltage-side main circuit 33 is closed as shown in FIG. 12. Then, the direct-current low voltage DL from the low-voltage power supply 100 is input to the low-voltage-side main circuit 33. The direct-current low voltage DL input to the low-voltage-side main circuit 33 initially passes through the low-voltage-side inrush resistor 56 and is input to the main system 31d of the low-voltage-side converter 31. As a result, the direct-current low voltage DL entering the low-voltage-side converter 31 is suppressed.

The direct-current low voltage DL input to the low-voltage-side converter 31 is boosted to the direct-current set voltage DS and is supplied to the electric compressor 15 through the low-voltage-side output circuit 34. In this case, in a case where the direct-current set voltage DS is output to the low-voltage-side output circuit 34, the coil 51c of the high-voltage cutoff relay 51 and the coil 52c of the low-voltage-side first relay 52 are applied.

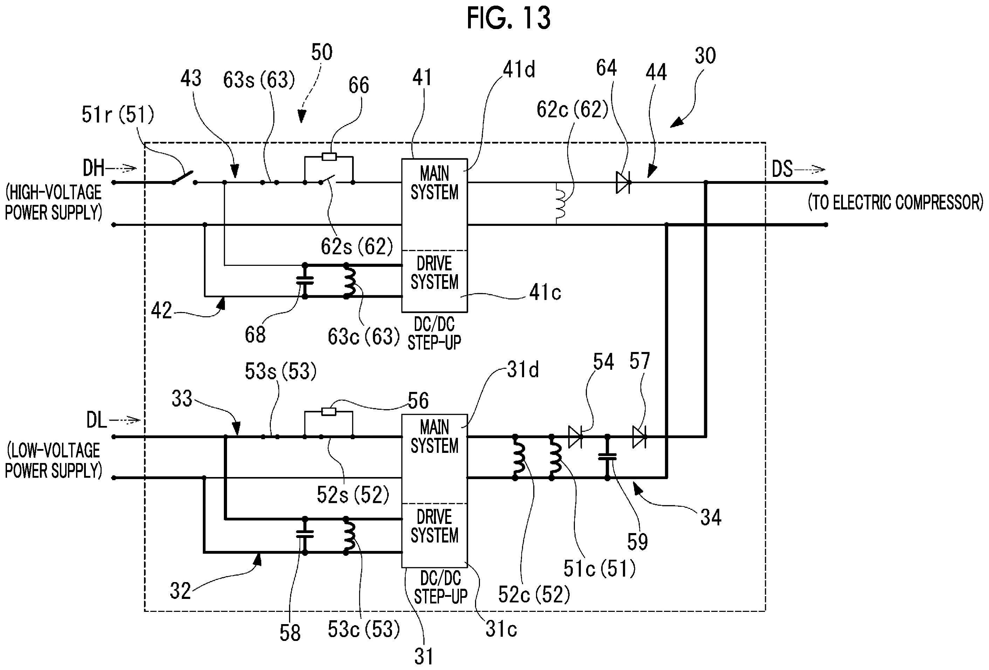

The coil 51c of the high-voltage cutoff relay 51 is applied, so that the switch 51r of the high-voltage cutoff relay 51 provided on the upstream side of the high-voltage-side drive circuit 42 and the high-voltage-side main circuit 43 is in an open state as shown in FIG. 13. As a result, the input circuit of the direct-current high voltage DH from the high-voltage power supply 200 is cut off, and the input of the direct-current high voltage DH to the high-voltage-side drive circuit 42 and the high-voltage-side main circuit 43 and the output of the direct-current set voltage DS from the high-voltage-side converter 41 are stopped. Then, the coil 62c of the high-voltage-side first relay 62 is not applied, and the switch 62s is in an open state. In addition, in the high-voltage-side drive circuit 42, the electric charge stored in the high-voltage-side capacitor 68 is released, so that the voltage supply to the coil 63c of the high-voltage-side second relay 63 and the drive system 41c of the high-voltage-side converter 41 is maintained for a certain period of time. As a result, the switch 63s maintains a closed state for a certain period of time. In addition, the operation of the high-voltage-side converter 41 is suppressed from being stopped while the main system 41d is applied.

In addition, the coil 52c of the low-voltage-side first relay 52 is applied, so that the switch 52s provided in the low-voltage-side main circuit 33 is closed. Then, the direct-current low voltage DL from the low-voltage power supply 100 is directly input to the low-voltage-side converter 31 without passing through the low-voltage-side inrush resistor 56. As a result, the direct-current low voltage DL suppressed by the low-voltage-side inrush resistor 56 returns to the original voltage.

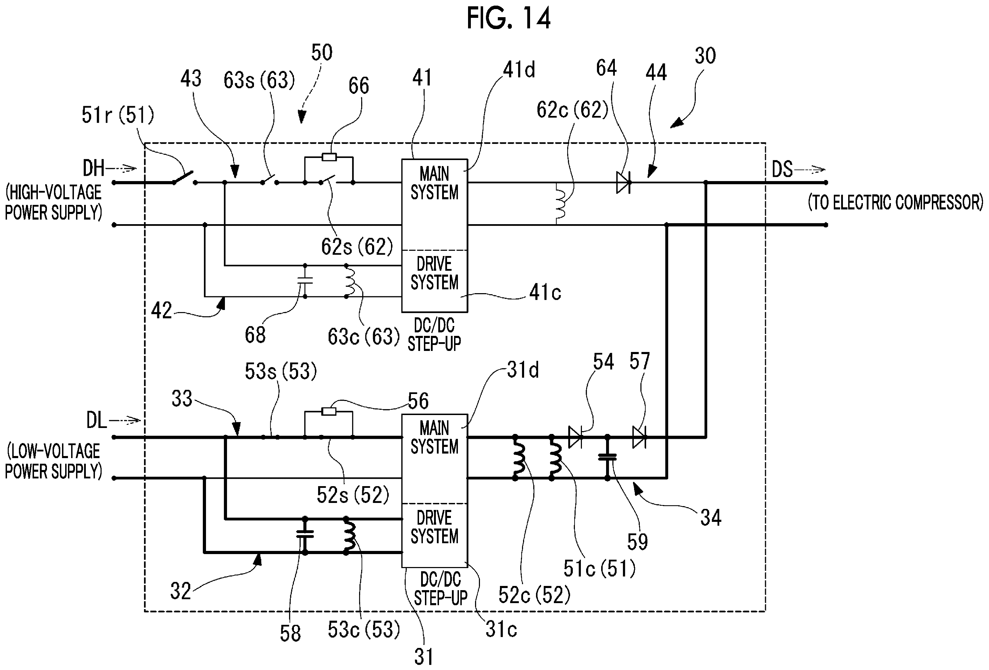

Thereafter, in a case where the release of the electric charge stored in the high-voltage-side capacitor 68 is completed, the switch 63s is in an open state as shown in FIG. 14 in a case where the coil 63c of the high-voltage-side second relay 63 is not applied.

In this way, in a case where the direct-current low voltage DL from the low-voltage power supply 100 is input in a state where the direct-current set voltage DS is output to the electric compressor 15 by the direct-current high voltage DH from the high-voltage power supply 200, the input of the direct-current high voltage DH from the high-voltage power supply 200 is cut off, and the output of the direct-current set voltage DS to the electric compressor 15 by the direct-current low voltage DL from the low-voltage power supply 100 is switched. That is, in a case where the input of the direct-current high voltage DH from the high-voltage power supply 200 and the input of the direct-current low voltage DL from the low-voltage power supply 100 are performed at the same time, the direct-current low voltage DL from the low-voltage power supply 100 is prioritized for the voltage supply to the electric compressor 15.

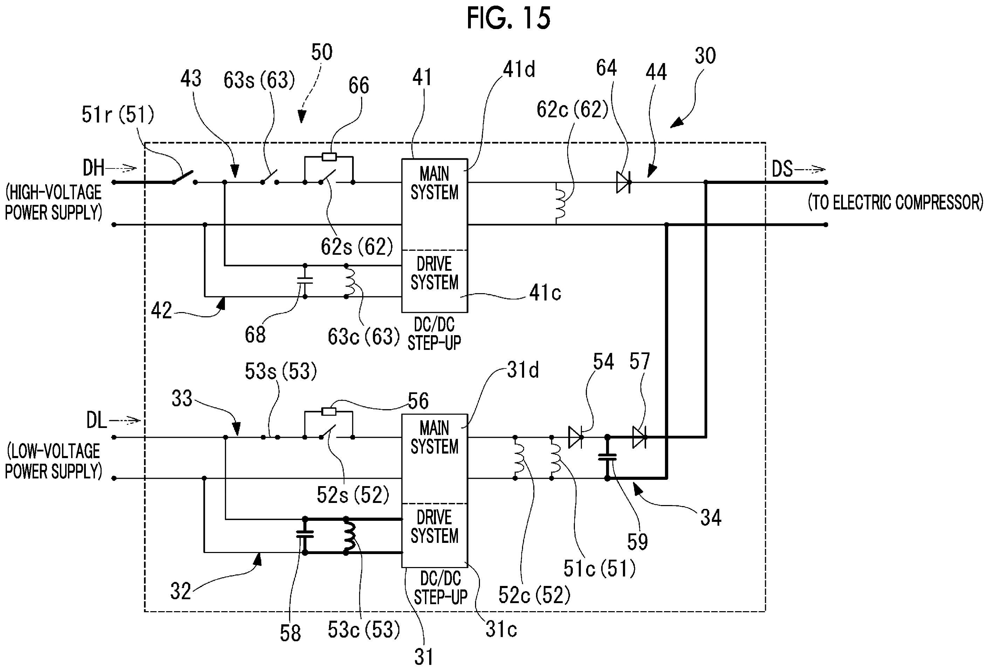

Thereafter, in a case where the supply of the direct-current low voltage DL from the low-voltage power supply 100 is stopped from the state shown in FIG. 14, the input of the direct-current low voltage DL to the low-voltage-side drive circuit 32 and the low-voltage-side main circuit 33 and the output of the direct-current set voltage DS from the low-voltage-side converter 31 are no longer present as shown in FIG. 15. Then, the coil 52c of the low-voltage-side first relay 52 is not applied, and the switch 52s is in an open state.

In this case, since the electric charges stored in the low-voltage-side first capacitor 58 and the low-voltage-side second capacitor 59 are released, the voltage supply to the coil 53c of the low-voltage-side second relay 53, the drive system 31c of the low-voltage-side converter 31, and the electric compressor 15 is maintained for a certain period of time. As a result, the switch 53s is maintained in a closed state. In addition, the low-voltage-side converter 31 suppresses the low-voltage-side converter 31 from stopping the operation while the main system 31d is applied.

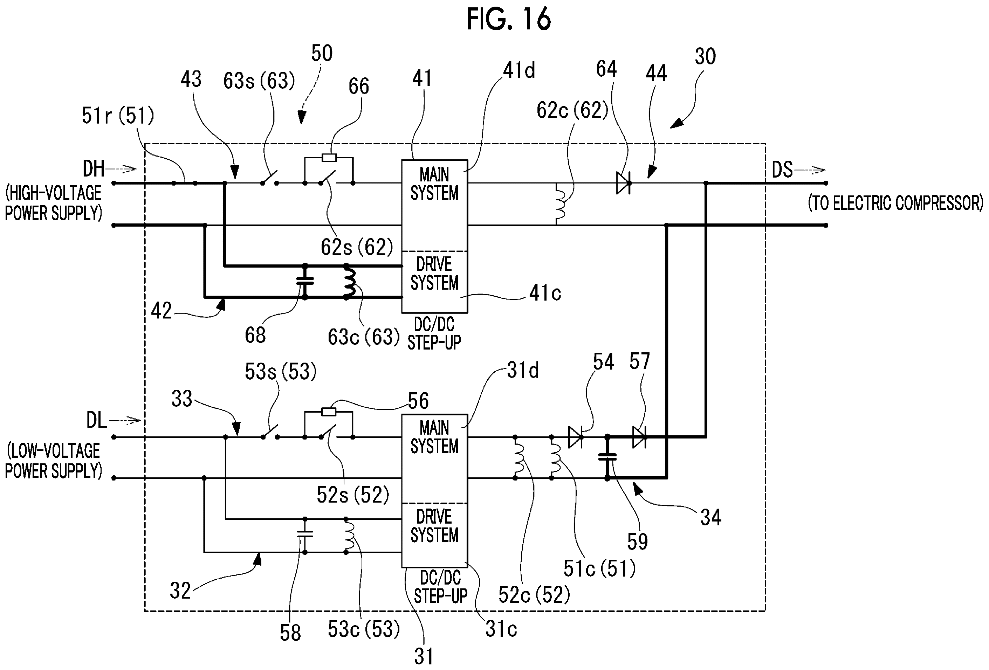

In addition, the coil 51c of the high-voltage cutoff relay 51 is not applied, so that the switch 51r of the high-voltage cutoff relay 51 is in a closed state from an open state as shown in FIG. 16.

Then, the direct-current high voltage DH from the high-voltage power supply 200 is input to the high-voltage-side drive circuit 42. The drive system 41c of the high-voltage-side converter 41 is applied by the direct-current high voltage DH. In addition, the coil 63c of the high-voltage-side second relay 63 is applied and the high-voltage-side capacitor 68 stores electricity by the input of the direct-current high voltage DH to the high-voltage-side drive circuit 42.

At this time, the voltage supply to the electric compressor 15 is maintained for a certain period of time by the discharge from the low-voltage-side second capacitor 59.

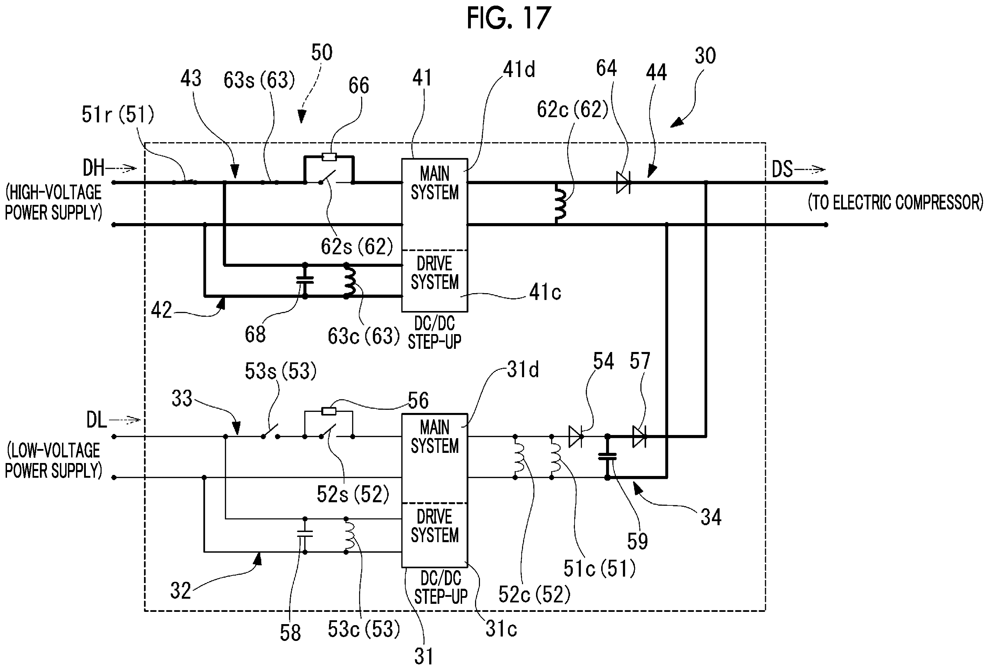

The coil 63c of the high-voltage-side second relay 63 is applied, so that the switch 63s provided in the high-voltage-side main circuit 43 is closed as shown in FIG. 17. Then, the direct-current high voltage DH from the high-voltage power supply 200 is input to the high-voltage-side main circuit 43. The direct-current high voltage DH input to the high-voltage-side main circuit 43 initially passes through the high-voltage-side inrush resistor 66 and is input to the main system 41d of the high-voltage-side converter 41. As a result, the direct-current high voltage DH that enters the high-voltage-side converter 41 is suppressed.

The direct-current high voltage DH input to the high-voltage-side converter 41 is stepped down to the direct-current set voltage DS and is supplied to the electric compressor 15 through the high-voltage-side output circuit 44. In this case, the direct-current set voltage DS is output to the high-voltage-side output circuit 44, so that the coil 62c of the high-voltage-side first relay 62 is applied.

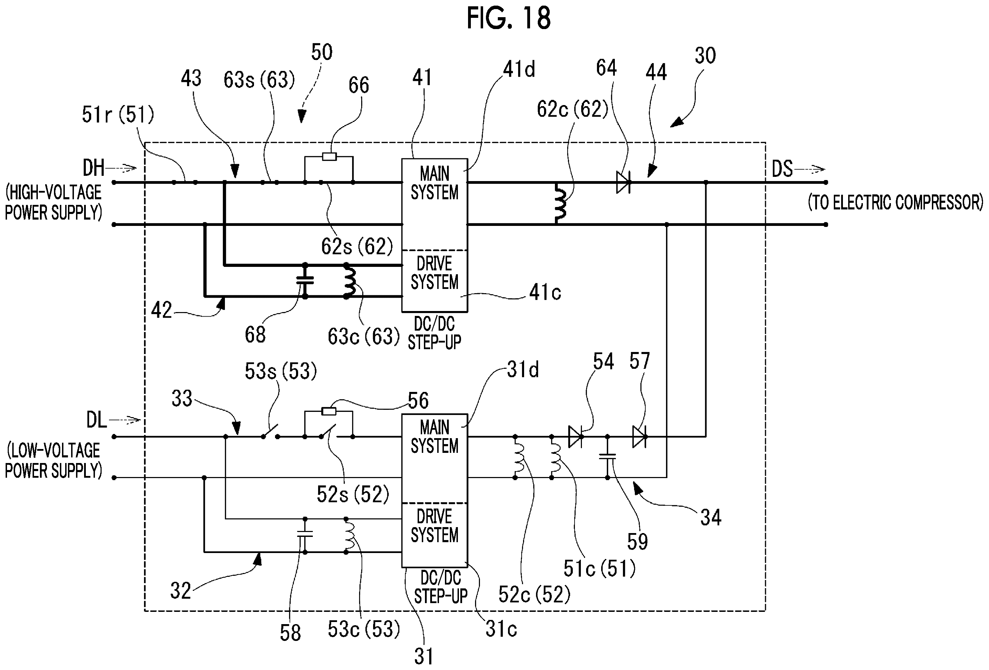

The coil 62c of the high-voltage-side first relay 62 is applied, so that the switch 62s provided in the high-voltage-side main circuit 43 is closed as shown in FIG. 18. Then, the direct-current high voltage DH from the high-voltage power supply 200 is directly input to the high-voltage-side converter 41 without passing through the high-voltage-side inrush resistor 66. As a result, the direct-current high voltage DH that has been suppressed by the high-voltage-side inrush resistor 66 returns to the original voltage.

In this way, in a state where the direct-current set voltage DS is output to the electric compressor 15 by the direct-current low voltage DL from the low-voltage power supply 100, in a case where the input of the direct-current low voltage DL from the low-voltage power supply 100 is stopped, the output of the direct-current set voltage DS to the electric compressor 15 is switched to the direct-current high voltage DH from the high-voltage power supply 200.

### (Voltage Supply from High-Voltage Power Supply in State of Voltage Supply from Low-Voltage Power Supply)

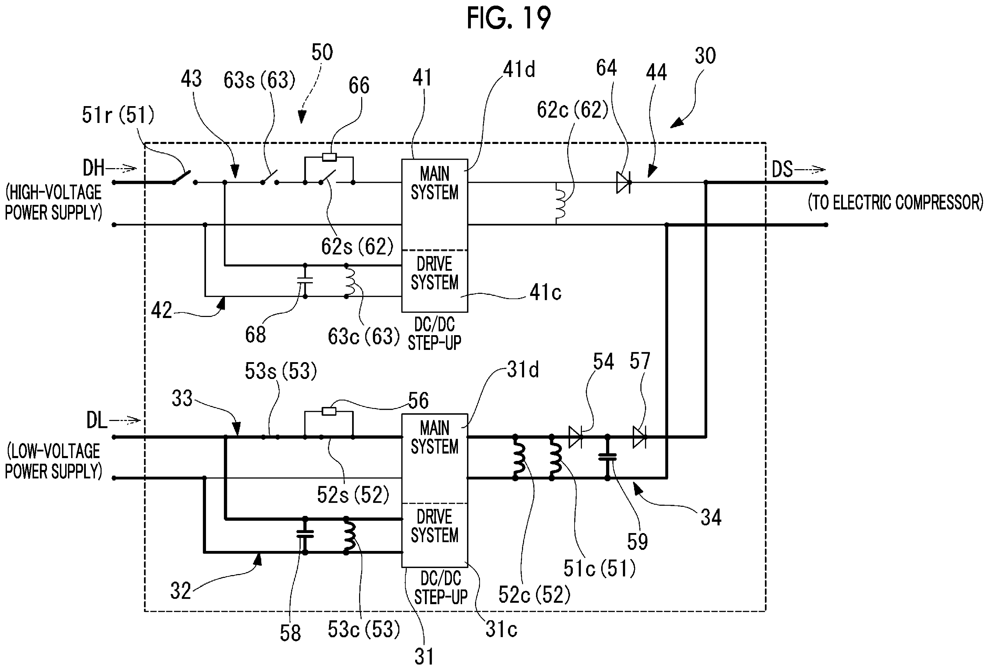

As shown in FIG. 9, in a state where the direct-current low voltage DL is input from the low-voltage power supply 100 and the direct-current set voltage DS converted by the low-voltage-side converter 31 is output to the electric compressor 15, even in a case where the direct-current high voltage DH from the battery 25, which is the high-voltage power supply 200, is to be input as shown in FIG. 19, the switch 51r of the high-voltage cutoff relay 51 is in the open state in this state. Therefore, in a state where the direct-current low voltage DL is input from the low-voltage power supply 100 and the direct-current set voltage DS converted by the low-voltage-side converter 31 is output to the electric compressor 15, the input of the direct-current high voltage DH from the high-voltage power supply 200 is not accepted.

In addition, in a case where the input of the direct-current high voltage DH from the battery 25, which is the high-voltage power supply 200, is stopped in the state shown in FIG. 19, the switch 51r of the high-voltage cutoff relay 51 is in the open state, so that the state returns to the state shown in FIG. 9 as it is.

### (Action and Effect)

In the voltage conversion device 30 having the above-described configuration, the low-voltage-side converter 31 converts the direct-current low voltage DL input from the low-voltage power supply 100 into the direct-current set voltage DS. The high-voltage-side converter 41 converts the direct-current high voltage DH input from the high-voltage power supply 200 into the direct-current set voltage DS. Then, the switching circuit unit 50 switches the voltage output state from the low-voltage-side converter 31 and the high-voltage-side converter 41 to the electric compressor 15 according to the voltage input state from the low-voltage power supply 100 and the high-voltage power supply 200. As a result, in the vehicle 1 that is a hybrid vehicle in which the engine 22 and the motor (not shown) are used in combination, in a case where the generator 21 driven by the engine 22 is set as the low-voltage power supply 100 and the battery 25 for the motor (not shown) is set as the high-voltage power supply 200, the voltage output state from the low-voltage-side converter 31 and the high-voltage-side converter 41 to the electric compressor 15 can be automatically switched according to the voltage input state from the low-voltage power supply 100 and the high-voltage power supply 200. As a result, the voltage conversion device 30 alone can perform the voltage conversion to be output to the electric compressor 15 without receiving control from the vehicle controller (not shown) on the vehicle body 2 side. Therefore, even in a state where the output of the engine 22 and the output of the motor (not shown) fluctuate according to the traveling state or the like of the vehicle 1, the voltage supply to the refrigeration cycle 12 can be efficiently and stably performed.

In addition, in the voltage conversion device 30, in a case where the direct-current low voltage DL is input only from the low-voltage power supply 100, the direct-current set voltage DS obtained by the low-voltage-side converter 31 is output, and in a case where the direct-current high voltage DH is input only from the high-voltage power supply 200, the direct-current set voltage DS obtained by the high-voltage-side converter 41 is output. In addition, in a case where the direct-current low voltage DL from the low-voltage power supply 100 and the direct-current high voltage DH from the high-voltage power supply 200 are input, the direct-current set voltage DS obtained by the low-voltage-side converter 31 and the direct-current set voltage DS obtained by the high-voltage-side converter 41 are output to the electric compressor 15. In this way, the voltage output state from the low-voltage-side converter 31 and the high-voltage-side converter 41 to the electric compressor 15 can be automatically switched according to the voltage input state from the low-voltage power supply 100 and the high-voltage power supply 200.

In addition, in the voltage conversion device 30, in a case where the direct-current set voltage DS is output to the low-voltage-side output circuit 34, the high-voltage cutoff relay 51 cuts off the high-voltage-side drive circuit 42 and the high-voltage-side main circuit 43. As a result, in a case where the input of the direct-current high voltage DH from the high-voltage power supply 200 and the input of the direct-current low voltage DL from the low-voltage power supply 100 are performed at the same time, in the voltage supply to the electric compressor 15, the input of the direct-current low voltage DL from the low-voltage power supply 100 can be prioritized.

In addition, in the voltage conversion device 30, the voltage output state from the low-voltage-side converter 31 and the high-voltage-side converter 41 to the electric compressor 15 can be automatically switched according to the voltage input state from the low-voltage power supply 100 and the high-voltage power supply 200 by the operations of the low-voltage-side first relay 52, the high-voltage-side first relay 62, the low-voltage-side second relay 53, and the high-voltage-side second relay 63.

In addition, in the voltage conversion device 30, the low-voltage-side diode 54 suppresses the reverse flow of the direct-current set voltage DS from the high-voltage-side output circuit 44 to the low-voltage-side converter 31. In addition, the high-voltage-side diode 64 suppresses the reverse flow of the direct-current set voltage DS from the low-voltage-side output circuit 34 to the high-voltage-side converter 41.

In addition, in the voltage conversion device 30, the low-voltage-side inrush resistor 56 and the high-voltage-side inrush resistor 66 suppress the excessive voltage from entering the low-voltage-side converter 31 and the high-voltage-side converter 41 in a case where the switch 52s of the low-voltage-side first relay 52 and the switch 62s of the high-voltage-side first relay 62 are connected.

In addition, in the voltage conversion device 30, the low-voltage-side first capacitor 58 and the high-voltage-side capacitor 68 can maintain the voltage supply to the drive system 31c of the low-voltage-side converter 31 and the drive system 41c of the high-voltage-side converter 41 for a certain period of time after the voltage supply to the main system 31d of the low-voltage-side converter 31 and the main system 41d of the high-voltage-side converter 41 is completed.

In addition, in the voltage conversion device 30, the low-voltage-side second capacitor 59 can maintain the voltage supply from the low-voltage-side output circuit 34 to the electric compressor 15 for a certain period of time.

In addition, in the voltage conversion device 30, in a case where the direct-current set voltage DS is set to be higher than the direct-current low voltage DL and lower than the direct-current high voltage DH, the direct-current low voltage DL can be boosted to the direct-current set voltage DS higher than the direct-current low voltage DL by the step-up converter as the low-voltage-side converter 31. In addition, the direct-current high voltage DH can be stepped down to the direct-current set voltage DS lower than the direct-current high voltage DH by the step-down converter as the high-voltage-side converter 41.

The refrigeration cycle system 10 having the above-described configuration can provide the refrigeration cycle system 10 including the voltage conversion device 30 that can efficiently and stably supply the voltage to the refrigeration cycle 12.

The vehicle 1 having the above-described configuration can provide the vehicle 1 including the voltage conversion device 30 that can efficiently and stably supply the voltage to the refrigeration cycle 12.

### (Other Embodiments)

The embodiment of the present disclosure has been described in detail above with reference to the drawings. However, the specific configuration is not limited to the embodiment, and includes design changes and the like without departing from the gist of the present disclosure.

In the above-described embodiment, the circuit configuration of the switching circuit unit 50 has been described, but the configuration can be appropriately changed as long as the same function can be exhibited. In addition, some of the functions of the switching circuit unit 50 may be omitted, or other functions may be added as appropriate.

In addition, in the above-described embodiment, the high-voltage cutoff relay 51 is provided, and a configuration is adopted in which the input of the direct-current low voltage DL from the low-voltage power supply 100 is prioritized in a case where the input of the direct-current high voltage DH from the high-voltage power supply 200 and the input of the direct-current low voltage DL from the low-voltage power supply 100 are performed at the same time, but the present disclosure is not limited thereto. For example, the input of the direct-current high voltage DH from the high-voltage power supply 200 can also be prioritized by providing the same configuration as the high-voltage cutoff relay 51 in the low-voltage-side circuit.

### <Supplementary Notes>

The voltage conversion device 30, the refrigeration cycle system 10, and the vehicle 1 described in the embodiment are understood as follows, for example.
(1) A voltage conversion device 30 according to a first aspect is a voltage conversion device 30 that converts voltages input from a low-voltage power supply 100 and a high-voltage power supply 200 into voltages corresponding to an electric compressor 15 of a refrigeration cycle 12 and outputs the converted voltages, the voltage conversion device 30 including: a low-voltage-side converter 31 that converts a direct-current low voltage DL input from the low-voltage power supply 100 into a direct-current set voltage DS set in advance to drive the electric compressor 15; a high-voltage-side converter 41 that converts a direct-current high voltage DH input from the high-voltage power supply 200 into the direct-current set voltage; and a switching circuit unit 50 that switches, according to a voltage input state from the low-voltage power supply 100 and the high-voltage power supply 200, a voltage output state from the low-voltage-side converter 31 and the high-voltage-side converter 41 to the electric compressor 15.
   With the voltage conversion device 30, the low-voltage-side converter 31 converts the direct-current low voltage DL input from the low-voltage power supply 100 into the direct-current set voltage DS. The high-voltage-side converter 41 converts the direct-current high voltage DH input from the high-voltage power supply 200 into the direct-current set voltage DS. Then, the switching circuit unit 50 switches the voltage output state from the low-voltage-side converter 31 and the high-voltage-side converter 41 to the electric compressor 15 according to the voltage input state from the low-voltage power supply 100 and the high-voltage power supply 200. As a result, in the vehicle 1 that is a hybrid vehicle in which the engine 22 and the motor (not shown) are used in combination, in a case where the generator 21 driven by the engine 22 is set as the low-voltage power supply 100 and the battery 25 for the motor (not shown) is set as the high-voltage power supply 200, the voltage output state from the low-voltage-side converter 31 and the high-voltage-side converter 41 to the electric compressor 15 can be automatically switched according to the voltage input state from the low-voltage power supply 100 and the high-voltage power supply 200. As a result, the voltage conversion device 30 alone can perform the voltage conversion to be output to the electric compressor 15 without receiving control from the vehicle controller (not shown) on the vehicle body 2 side. Therefore, even in a state where the output of the engine 22 and the output of the motor (not shown) fluctuate according to the traveling state or the like of the vehicle 1, the voltage supply to the refrigeration cycle 12 can be efficiently and stably performed.
(2) The voltage conversion device 30 according to a second aspect is the voltage conversion device 30 of (1), in which the switching circuit unit 50 outputs, in a case where the direct-current low voltage DL is input only from the low-voltage power supply 100, the direct-current set voltage DS obtained by converting the direct-current low voltage DL with the low-voltage-side converter 31 to the electric compressor 15, outputs, in a case where the direct-current high voltage DH is input only from the high-voltage power supply 200, the direct-current set voltage DS obtained by converting the direct-current high voltage DH with the high-voltage-side converter 41 to the electric compressor 15, and outputs, in a case where the direct-current low voltage DL from the low-voltage power supply 100 and the direct-current high voltage DH from the high-voltage power supply 200 are input, the direct-current set voltage DS obtained by converting the direct-current low voltage DL with the low-voltage-side converter 31 and the direct-current set voltage DS obtained by converting the direct-current high voltage DH with the high-voltage-side converter 41 to the electric compressor 15.
   As a result, in a case where the direct-current low voltage DL is input only from the low-voltage power supply 100, the direct-current set voltage DS obtained by the low-voltage-side converter 31 is output, and in a case where the direct-current high voltage DH is input only from the high-voltage power supply 200, the direct-current set voltage DS obtained by the high-voltage-side converter 41 is output. In addition, in a case where the direct-current low voltage DL from the low-voltage power supply 100 and the direct-current high voltage DH from the high-voltage power supply 200 are input, the direct-current set voltage DS obtained by the low-voltage-side converter 31 and the direct-current set voltage DS obtained by the high-voltage-side converter 41 are output to the electric compressor 15. In this way, the voltage output state from the low-voltage-side converter 31 and the high-voltage-side converter 41 to the electric compressor 15 can be automatically switched according to the voltage input state from the low-voltage power supply 100 and the high-voltage power supply 200.
(3) The voltage conversion device 30 according to a third aspect is the voltage conversion device 30 of (1) or (2), in which the switching circuit unit 50 includes a low-voltage-side drive circuit 32 that inputs the direct-current low voltage DL to a drive system 31c of the low-voltage-side converter 31, a low-voltage-side main circuit 33 that inputs the direct-current low voltage DL to a main system 31d of the low-voltage-side converter 31, a low-voltage-side output circuit 34 that outputs the direct-current set voltage DS output from the main system 31d of the low-voltage-side converter 31 to the electric compressor 15, a high-voltage-side drive circuit 42 that inputs the direct-current high voltage DH to a drive system 41c of the high-voltage-side converter 41, a high-voltage-side main circuit 43 that inputs the direct-current high voltage DH to a main system 41d of the high-voltage-side converter 41, a high-voltage-side output circuit 44 that outputs the direct-current set voltage DS output from the main system 41d of the high-voltage-side converter 41 to the electric compressor 15, and a high-voltage cutoff relay 51 that cuts off, in a case where the direct-current set voltage DS is output to the low-voltage-side output circuit 34, the high-voltage-side drive circuit 42 and the high-voltage-side main circuit 43.
   As a result, in a case where the direct-current set voltage DS is output to the low-voltage-side output circuit 34, the high-voltage cutoff relay 51 cuts off the high-voltage-side drive circuit 42 and the high-voltage-side main circuit 43. As a result, in a case where the direct-current low voltage DL is input only from the low-voltage power supply 100, the direct-current set voltage DS obtained by converting the direct-current low voltage DL with the low-voltage-side converter 31 can be output to the electric compressor 15.
(4) The voltage conversion device 30 according to a fourth aspect is the voltage conversion device 30 of (3), in which the switching circuit unit 50 further includes a low-voltage-side first relay 52 that inputs, in a case where the direct-current set voltage DS is output to the low-voltage-side output circuit 34, the direct-current low voltage DL to the low-voltage-side main circuit 33, a high-voltage-side first relay 62 that inputs, in a case where the direct-current set voltage DS is output to the high-voltage-side output circuit 44, the direct-current high voltage DH to the high-voltage-side main circuit 43, a low-voltage-side second relay 53 that inputs, in a case where the direct-current low voltage DL is input to the low-voltage-side drive circuit 32, the direct-current low voltage DL to the low-voltage-side main circuit 33, and a high-voltage-side second relay 63 that inputs, in a case where the direct-current high voltage DH is input to the high-voltage-side drive circuit 42, the direct-current high voltage DH to the high-voltage-side main circuit 43.
   As a result, the voltage output state from the low-voltage-side converter 31 and the high-voltage-side converter 41 to the electric compressor 15 can be automatically switched according to the voltage input state from the low-voltage power supply 100 and the high-voltage power supply 200 by the operations of the low-voltage-side first relay 52, the high-voltage-side first relay 62, the low-voltage-side second relay 53, and the high-voltage-side second relay 63.
(5) The voltage conversion device 30 according to a fifth aspect is the voltage conversion device 30 of (3) or (4), in which the switching circuit unit 50 further includes a low-voltage-side diode 54 that is provided in the low-voltage-side output circuit 34 and outputs the direct-current set voltage DS only to the electric compressor 15 side from the low-voltage-side converter 31, and a high-voltage-side diode 64 that is provided in the high-voltage-side output circuit 44 and outputs the direct-current set voltage DS only to the electric compressor 15 side from the high-voltage-side converter 41.
   As a result, the low-voltage-side diode 54 suppresses the reverse flow of the direct-current set voltage DS from the high-voltage-side output circuit 44 to the low-voltage-side converter 31. In addition, the high-voltage-side diode 64 suppresses the reverse flow of the direct-current set voltage DS from the low-voltage-side output circuit 34 to the high-voltage-side converter 41.
(6) The voltage conversion device 30 according to a sixth aspect is the voltage conversion device 30 of (3) or (5), in which the switching circuit unit 50 further includes a low-voltage-side inrush resistor 56 that is disposed in parallel with a switch 52s of the low-voltage-side first relay 52 provided in the low-voltage-side main circuit 33, and a high-voltage-side inrush resistor 66 that is disposed in parallel with a switch 62s of the high-voltage-side first relay 62 provided in the high-voltage-side main circuit 43.
   As a result, in a case where the switch 52s of the low-voltage-side first relay 52 and the switch 62s of the high-voltage-side first relay 62 are connected, the excessive voltage is suppressed from entering the low-voltage-side converter 31 and the high-voltage-side converter 41 by the low-voltage-side inrush resistor 56 and the high-voltage-side inrush resistor 66.
(7) The voltage conversion device 30 according to a seventh aspect is the voltage conversion device 30 of any one of (3) to (6), in which the switching circuit unit 50 further includes a low-voltage-side first capacitor 58 that is provided in the low-voltage-side drive circuit 32, and a high-voltage-side capacitor 68 that is provided in the high-voltage-side drive circuit 42.
   As a result, the low-voltage-side first capacitor 58 and the high-voltage-side capacitor 68 can maintain the voltage supply to the drive system 31c of the low-voltage-side converter 31 and the drive system 41c of the high-voltage-side converter 41 for a certain period of time after the voltage supply to the main system 31d of the low-voltage-side converter 31 and the main system 41d of the high-voltage-side converter 41 is completed.
(8) The voltage conversion device 30 according to an eighth aspect is the voltage conversion device 30 of any one of (3) to (7), in which the switching circuit unit 50 further includes a low-voltage-side second capacitor 59 that is provided in the low-voltage-side output circuit 34.
   As a result, the low-voltage-side second capacitor 59 can maintain the voltage supply from the low-voltage-side output circuit 34 to the electric compressor 15 for a certain period of time.
(9) The voltage conversion device 30 according to a ninth aspect is the voltage conversion device 30 of any one of (1) to (8), in which the direct-current set voltage DS is set to be higher than the direct-current low voltage DL and lower than the direct-current high voltage DH, the low-voltage-side converter 31 is a step-up converter, and the high-voltage-side converter 41 is a step-down converter.
   As a result, in a case where the direct-current set voltage DS is set to be higher than the direct-current low voltage DL and lower than the direct-current high voltage DH, the step-up converter as the low-voltage-side converter 31 can step up the direct-current low voltage DL to the direct-current set voltage DS higher than the direct-current low voltage DL. In addition, the high-voltage converter as the high-voltage-side converter 41 can step down the direct-current high voltage DH to the direct-current set voltage DS lower than the direct-current high voltage DH.
(10) A refrigeration cycle system 10 according to a tenth aspect includes the voltage conversion device 30 of any one of (1) to (9), and a refrigeration cycle 12 having the electric compressor 15 that is driven by the direct-current set voltage DS output from the voltage conversion device 30.
   As a result, it is possible to provide the refrigeration cycle system 10 including the voltage conversion device 30 that can efficiently and stably supply the voltage to the refrigeration cycle 12.
(11) A vehicle 1 according to an eleventh aspect includes a vehicle body 2, and the refrigeration cycle system 10 of (10) installed in the vehicle body 2.

As a result, it is possible to provide the vehicle 1 including the voltage conversion device 30 that can efficiently and stably supply the voltage to the refrigeration cycle 12.

### Industrial Applicability

According to each embodiment of the present disclosure, it is possible to efficiently and stably supply the voltage to the refrigeration cycle.

### Reference Signs List

1: vehicle
2: vehicle body
4: chassis
4w: wheel
5: cabin
6: container
7: unit housing
10: refrigeration cycle system
11: container
12: refrigeration cycle
13: indoor heat exchanger
14: outdoor heat exchanger
15: electric compressor
21: generator
22: engine
25: battery
30: voltage conversion device
31: low-voltage-side converter
31c: drive system
31d: main system
32: low-voltage-side drive circuit
33: low-voltage-side main circuit
34: low-voltage-side output circuit
41: high-voltage-side converter
41c: drive system
41d: main system
42: high-voltage-side drive circuit
43: high-voltage-side main circuit
44: high-voltage-side output circuit
50: switching circuit unit
51: high-voltage cutoff relay
51c: coil
51r: switch
52: low-voltage-side first relay
52c: coil
52s: switch
53: low-voltage-side second relay
53c: coil
53s: switch
54: low-voltage-side diode
56: low-voltage-side inrush resistor
57: diode
58: low-voltage-side first capacitor
59: low-voltage-side second capacitor
62: high-voltage-side first relay
62c: coil
62s: switch
63: high-voltage-side second relay
63c: coil
63s: switch
64: high-voltage-side diode
66: high-voltage-side inrush resistor
68: high-voltage-side capacitor
100: low-voltage power supply
200: high-voltage power supply
DH: direct-current high voltage
DL: direct-current low voltage
DS: direct-current set voltage

## Claims

1. A voltage conversion device that converts voltages input from a low-voltage power supply and a high-voltage power supply into voltages corresponding to an electric compressor of a refrigeration cycle and outputs the voltages, the voltage conversion device comprising:
a low-voltage-side converter that converts a direct-current low voltage input from the low-voltage power supply into a direct-current set voltage set in advance to drive the electric compressor;
a high-voltage-side converter that converts a direct-current high voltage input from the high-voltage power supply into the direct-current set voltage; and
a switching circuit unit that switches, according to a voltage input state from the low-voltage power supply and the high-voltage power supply, a voltage output state from the low-voltage-side converter and the high-voltage-side converter to the electric compressor.

2. The voltage conversion device according to Claim 1,
wherein the switching circuit unit
outputs, in a case where the direct-current low voltage is input only from the low-voltage power supply, the direct-current set voltage obtained by converting the direct-current low voltage with the low-voltage-side converter to the electric compressor,
outputs, in a case where the direct-current high voltage is input only from the high-voltage power supply, the direct-current set voltage obtained by converting the direct-current high voltage with the high-voltage-side converter to the electric compressor, and
outputs, in a case where the direct-current low voltage from the low-voltage power supply and the direct-current high voltage from the high-voltage power supply are input, the direct-current set voltage obtained by converting the direct-current low voltage with the low-voltage-side converter and the direct-current set voltage obtained by converting the direct-current high voltage with the high-voltage-side converter to the electric compressor.

3. The voltage conversion device according to Claim 1 or 2,
wherein the switching circuit unit includes
a low-voltage-side drive circuit that inputs the direct-current low voltage to a drive system of the low-voltage-side converter,
a low-voltage-side main circuit that inputs the direct-current low voltage to a main system of the low-voltage-side converter,
a low-voltage-side output circuit that outputs the direct-current set voltage output from the main system of the low-voltage-side converter to the electric compressor,
a high-voltage-side drive circuit that inputs the direct-current high voltage to a drive system of the high-voltage-side converter,
a high-voltage-side main circuit that inputs the direct-current high voltage to a main system of the high-voltage-side converter,
a high-voltage-side output circuit that outputs the direct-current set voltage output from the main system of the high-voltage-side converter to the electric compressor, and
a high-voltage cutoff relay that cuts off, in a case where the direct-current set voltage is output to the low-voltage-side output circuit, the high-voltage-side drive circuit and the high-voltage-side main circuit.

4. The voltage conversion device according to Claim 3,
wherein the switching circuit unit further includes
a low-voltage-side first relay that inputs, in a case where the direct-current set voltage is output to the low-voltage-side output circuit, the direct-current low voltage to the low-voltage-side main circuit,
a high-voltage-side first relay that inputs, in a case where the direct-current set voltage is output to the high-voltage-side output circuit, the direct-current high voltage to the high-voltage-side main circuit,
a low-voltage-side second relay that inputs, in a case where the direct-current low voltage is input to the low-voltage-side drive circuit, the direct-current low voltage to the low-voltage-side main circuit, and
a high-voltage-side second relay that inputs, in a case where the direct-current high voltage is input to the high-voltage-side drive circuit, the direct-current high voltage to the high-voltage-side main circuit.

5. The voltage conversion device according to Claim 4,
wherein the switching circuit unit further includes
a low-voltage-side diode that is provided in the low-voltage-side output circuit and outputs the direct-current set voltage only to an electric compressor side from the low-voltage-side converter, and
a high-voltage-side diode that is provided in the high-voltage-side output circuit and outputs the direct-current set voltage only to the electric compressor side from the high-voltage-side converter.

6. The voltage conversion device according to Claim 4,
wherein the switching circuit unit further includes
a low-voltage-side inrush resistor that is disposed in parallel with a switch of the low-voltage-side first relay provided in the low-voltage-side main circuit, and
a high-voltage-side inrush resistor that is disposed in parallel with a switch of the high-voltage-side first relay provided in the high-voltage-side main circuit.

7. The voltage conversion device according to Claim 4,
wherein the switching circuit unit further includes
a low-voltage-side first capacitor that is provided in the low-voltage-side drive circuit, and
a high-voltage-side capacitor that is provided in the high-voltage-side drive circuit.

8. The voltage conversion device according to Claim 4,
wherein the switching circuit unit further includes
a low-voltage-side second capacitor that is provided in the low-voltage-side output circuit.

9. The voltage conversion device according to Claim 1 or 2,
wherein the direct-current set voltage is set to be higher than the direct-current low voltage and lower than the direct-current high voltage,
the low-voltage-side converter is a step-up converter, and
the high-voltage-side converter is a step-down converter.

10. A refrigeration cycle system comprising:
the voltage conversion device according to Claim 1 or 2; and
a refrigeration cycle having the electric compressor that is driven by the direct-current set voltage output from the voltage conversion device.

11. A vehicle comprising:
a vehicle body; and
the refrigeration cycle system according to Claim 10 installed in the vehicle body.
